# EUROPÄISCHE PATENTSCHRIFT

(11) **EP 1 291 647 B1**
(45) Veröffentlichungstag und Bekanntmachung des Hinweises auf die Patenterteilung: **04.04.2012**
(21) Anmeldenummer: 02018404.0
(22) Anmeldetag: 15.08.2002
(51) Int. Cl.: G01N 23/00, G01N 23/20

(54) **Magnetische Greifvorrichtung zum Wechseln von länglichen Proben in einem Röntgen-Analysegerät**
Magnetic gripping device for changing elongated probes in an X-ray analyser
Dispositif de préhension magnétique pour changer des échantillons allongés dans un analysateur à rayons X

(30) Priorität: 07.09.2001 DE 10143990
(43) Veröffentlichungstag der Anmeldung: 12.03.2003
(73) Patentinhaber: Bruker AXS GmbH, 76187 Karlsruhe (DE)
(72) Erfinder: Greenbank, M.G.M., Irlam M/C (GB); Watts, A.M., Congleton, Cheshire (GB); Hardman, P.J., Heaton Moor, Stockport SK44E9 (GB); Mauser, Karl-Eugen, 76467 Bietigheim (DE)
(74) Vertreter: Kohler Schmid Möbus

(56) Entgegenhaltungen:
- WO-A2-01/11345
- DE-A- 2 324 255
- DE-A- 3 512 459
- DE-C- 19 851 501

## Beschreibung

Die Erfindung betrifft ein Röntgen-Analysegerät zur Untersuchung von Material-Proben, mit einer Vorrichtung zum automatischen Wechseln der Proben, die eine Greifvorrichtung zur gezielten Entnahme einer beliebigen Probe aus einer Ablege-Position und Zuführung in eine Übergabe- und/oder Mess-Position sowie zurück auf eine Ablege-Position umfasst, wobei zumindest einige der Proben von einem Probenhalter in Umfangsrichtung umgeben sind.

Eine solches Röntgen-Analysegerät ist beispielsweise bekannt aus der Firmendruckschrift "SPECTROMETRY SOLUTIONS; S4 EXPLORER" der Firma Bruker AXS Analytical X-Ray Systems GmbH aus dem Jahre 2001.

Die prinzipielle Funktionsweise einer gattungsgemäßen Anordnung ist darin ausführlich beschrieben. Derartige Röntgen-Analysegeräte eignen sich für schnelle, routinemäßige, zerstörungsfreie Analysen der unterschiedlichsten Materialproben in Laboren und Forschungseinrichtungen. Dabei können entweder Röntgen-Fluoreszenz-Methoden, aber auch Verfahren der Röntgen-Diffraktometrie oder andere Röntgen-Analyse-Methoden zur Untersuchung der Materialproben eingesetzt werden. Die Materialproben können sowohl als Festkörper massiv oder in Pulverform, aber auch als Flüssigkeitsproben in entsprechenden Probengefäßen vorliegen.

Da die gattungsgemäßen Analyse-Geräte für routinemäßige Untersuchungen einer großen Anzahl von Proben in kurzen Zeiten vorgesehen sind, ist eine automatisch Wechselvorrichtung zum Transport der jeweils zu vermessenden Probe aus einer Vielzahl von zu untersuchenden Proben innerhalb des Gerätes unerlässlich. Bei den bekannten Geräten ist zur Aufnahme der Proben ein unbeweglich in der Apparatur befestigter Probentisch vorgesehen, wie er beispielsweise in dem oben zitierten Firmenprospekt mehrfach gezeigt ist. In diesem Probentisch sind Aufnahmeöffnungen zum Einsetzen der diversen Proben bzw. Probengefäßen in einer m × n - Matrix angeordnet vorgesehen. Diese werden von Hand nach einem vom Benutzer jeweils festzulegenden Schema mit den diversen Proben bestückt, bevor eine Messserie begonnen wird, die dann automatisiert ohne weiteren manuellen Eingriff des Benutzers abläuft.

Dazu ist im Röntgen-Analysegerät eine Greifvorrichtung zur gezielten Entnahme einer beliebigen Probe aus einer der Ablege-Positionen und Zuführung in eine Übergabe- oder Messposition und wieder zurück in die Ablegeposition vorgesehen. Um jede Position auf dem starren, rechteckigen Probentisch anfahren zu können, ist eine relativ komplexe Antriebsmechanik der Greifvorrichtung erforderlich. Der Greifroboter muss dazu sowohl in x- als auch in y-Richtung bewegbar sein.

Üblicherweise sind bei gattungsgemäßen Röntgen-Analysegeräten die Proben bzw. Probengefäße so dimensioniert, dass sie mit dem oberen Rand des Probenhalters, an dem die Greifvorrichtung angreift, in z-Richtung abschließen, wie beispielsweise in der DE 198 51 501 C1 beschrieben ist. Entsprechend liegt dann die Greifvorrichtung mit ihrer probenseitigen Partie am oberen Rand der Probe und gleichzeitig des Probenhalters beim Greifvorgang an.

Proben, die in z-Richtung ausgedehnt sind, beispielsweise Behälter mit Probenflüssigkeit oder stabförmige Festkörperproben, können mit diesem System jedoch nicht automatisch mit Hilfe der Greifvorrichtung bewegt werden. In solchen Fällen müssen bislang die Proben einzeln und von Hand in die Messposition eingesetzt werden. Eine routinemäßige Untersuchung einer Vielzahl von Proben ist daher bisher bei Vorliegen von derartigen länglichen Proben mit der herkömmlichen Anordnung von Greifvorrichtung und Probenhalter nicht möglich.

Aufgabe der Erfindung ist es demgegenüber, ein Röntgen-Analysegerät mit den eingangs genannten Merkmalen vorzustellen, das mit möglichst geringen und technischen einfachen Modifikationen problemlos auch die automatische Verarbeitung einer Vielzahl von Proben in einem gattungsgemäßen Röntgen-Analysegerät zulässt, wenn darunter in z-Richtung erheblich ausgedehnte Proben sind.

Erfindungsgemäß wird diese Aufgabe auf ebenso überraschend einfache wie wirkungsvolle Art und Weise dadurch gelöst, dass die Proben oder Gefäße, welche die Proben enthalten, den Probenhalter in Richtung einer zur horizontalen x-y-Ebene senkrechten, vertikalen z-Richtung überragen, und dass die Greifvorrichtung probenseitig so ausgebildet ist, dass sie die den Probenhalter überragenden Teile einer Probe oder des die Probe enthaltenden Gefäßes in einer Betriebsstellung in z-Richtung umschließen und den Probenhalter ergreifen kann.

Damit gelingt es mit technisch leicht zu realisierenden Mitteln, ein gattungsgemäßes Röntgen-Analysegerät so zu modifizieren, dass auch in z-Richtung ausgedehnte Proben, beispielsweise Flüssigkeitsbehälter leicht verarbeitet werden können. Mit dieser Ausgestaltung ist außerdem eine einfachere Be- und Entladung eines Probenhalters mit derartigen in z-Richtung ausgedehnten Proben möglich. Daneben kann ein derartig ausgestaltetes Greifersystem aber auch herkömmliche Proben problemlos greifen, so dass diese Ausführungsform der Erfindung universell bei unterschiedlichsten Arten von Proben einsetzbar ist. Während bisher üblicherweise für in z-Richtung ausgedehntere Proben aufwändige Speziallösungen gefunden werden mussten, kann jetzt mit der obigen Ausführungsform der Erfindung ein ganz einfacher Probenhalter standardisiert und mit sehr geringen Kosten eingesetzt werden.

Bei einer besonders vorteilhaften Ausführungsform der Erfindung ist vorgesehen, dass der Probenhalter im Anschluss an das bodenseitige Ende der Probe oder eines die Probe enthaltenden Gefäßes einen (oder mehrere) Halteabschnitt(e) aufweist, der (die) in einer zur x-y-Ebene parallelen Ebene die Probe oder das die Probe enthaltende Gefäß unterfasst (unterfassen) und als mechanischer Anschlag in z-Richtung für die Probe oder das die Probe enthaltende Gefäß wirkt (wirken). Damit wird die Beladung des Probenhalters mit der Probe noch weiter vereinfacht, wobei eine definierte Endstellung in z-Richtung erreicht wird.

Vorzugsweise ist der Halteabschnitt ringförmig aufgebaut, so dass die Probe beim Einpassen in den Probenhalter auf dem gesamten Umfang Kontakt hat. Bei bodenseitig flach abschließenden Proben wird auf diese Weise ein Flächenkontakt erreicht, während bei bodenseitig ausgebauchten Proben, beispielsweise einem Reagenzglas, zumindest ein kreisringförmiger Kontakt hergestellt ist, der eine definierte z-Stellung der Probe relativ zum Probenhalter sicherstellt.

Üblicherweise umgibt der Probenhalter die Probe auf seiner im Betrieb der Greifvorrichtung zugewandten Seite ebenfalls ringförmig, vorzugsweise kreisringförmig. Die Probe bzw. das die Probe enthaltende Gefäß kann dann entweder in den Probenhalterring eingestellt oder eingepresst werden.

Bei einer Weiterbildung der Erfindung kann aber auch der Probenhalter die Probe auf seiner im Betrieb der Greifvorrichtung zugewandten Seite mit mehreren in z-Richtung verlaufenden, untereinander parallelen Stäben in Umfangsrichtung umgeben. Dadurch wird eine bessere Zentrierung der Probe erreicht, wobei durch die Ausdehnung der Stäbe in z-Richtung auch eine gewisse Flexibilität zum Ausweichen in der x-y-Ebene beim Einführen der Probe möglich ist, so dass einer Beschädigung der Probe durch zu starkes Einpressen in den Probenhalter vorgebeugt wird.

Vorteilhaft ist auch eine Weiterbildung, bei der die parallelen Stäbe auf der im Betrieb der Greifvorrichtung zugewandten Oberseite des ringförmigen Halteabschnitts angeordnet sind. Der Probenhalter wird also in diesem Falle durch den ringförmigen Halteabschnitt und die darauf aufgesetzten, in z-Richtung verlaufenden parallelen Stäbe gebildet.

Auf der Gegenseite kann bei Ausführungsformen der Erfindung entsprechend auch die Greifvorrichtung anstelle einer ringförmigen probenseitigen Ausgestaltung mindestens drei, vorzugsweise gleichmäßig um den Umfang der zu haltenden Probe verteilte, in z-Richtung verlaufende parallele Stäbe aufweisen.

Bei Ausführungsformen, welche nicht Teil der Erfindung sind, kann die Greifvorrichtung mechanisch arbeiten. Ein solcher Greifroboter ist einfach und preiswert in der Herstellung, braucht allerdings in der Regel viel Platz und kann daher nicht sonderlich kompakt konstruiert werden. Insbesondere der seitliche Platzbedarf in der horizontalen x-y-Ebene wird bei einem mechanischen Greifvorgang normalerweise relativ groß sein, so dass die Ablege-Positionen der Proben auf dem Probentisch bei diesen Ausführungsformen entsprechend weit auseinander liegen müssen, damit die Proben im Probenhalter sicher ergriffen werden können, ohne dass benachbarte Proben berührt werden.

Alternativ oder ergänzend kann die Greifvorrichtung aber auch pneumatisch, vorzugsweise durch Ansaugen der Probenhalter mittels Unterdruck arbeiten. Dies ist aber nicht Teil der Erfindung. Denkbar ist auch eine Kombination mit einem pneumatisch betätigbaren mechanischen Greifer, so dass der pneumatische Greifvorgang durch Ansaugen immer nur an Stellen mit besonders geringem Platzangebot ausgeführt werden muss. Die Pneumatikeinrichtung dient dann für beide Teile des Greifsystems.

Bei einer Weiterbildung dieser Ausführungsform, die nicht Teil der Erfindung ist und bei der die Greifvorrichtung entsprechend der oben beschriebenen Ausführungsform probenseitig angeordnete stabförmige Greifelemente aufweist, können zumindest einige der in z-Richtung verlaufenden parallelen Stäbe als Saugrüssel zum Ansaugen von Teilen des Probenhalters ausgebildet sein. Eine solche Anordnung ist in jedem Fall erheblich platzsparender als eine mechanische Greifanordnung, da die parallelen Stäbe nicht in der x-y-Ebene beim Greifvorgang ausweichen müssen, sondern starr von oben in z-Richtung auf den Probenhalter heruntergefahren werden können.

Bevorzugt ist die Ausführung der Erfindung, bei der die Greifvorrichtung magnetisch arbeitet. Zwar ist eine derartige magnetische Einrichtung in der Regel etwas teurer in der Herstellung als eine mechanische, sie kann aber wesentlich kompakter gestaltet werden.

Meistens wird bei diesen Ausführungsformen die Greifvorrichtung als Elektromagnet ausgebildet sein, der von außen beliebig zum Aktivieren und Deaktivieren des Greifvorgangs mit elektrischen Strömen angesteuert werden kann.

Bei anderen Weiterbildungen dieser Ausführungsform kann aber auch die Greifvorrichtung auf ihrer dem Probenhalter im Betrieb zugewandten Seite permanentmagnetische Abschnitte aufweisen. Eine solche magnetische Greifvorrichtung ist etwas unaufwändiger als ein Elektromagnet, dafür muss allerdings eine Vorrichtung zum mechanischen Verfahren der permanentmagnetischen Abschnitte in z-Richtung zum Abtrennen der ergriffenen Probe beim Ablegen in die jeweilige Zielposition vorgesehen werden.

Bei einer besonders bevorzugten Weiterbildung der Erfindung ist der Probenhalter auf seiner im Betrieb der Greifvorrichtung zugewandten Seite zumindest teilweise aus magnetisierbarem, vorzugsweise ferromagnetischem Material aufgebaut, so dass er besonders einfach mit Hilfe einer magnetischen Greifvorrichtung angezogen und ergriffen werden kann.

Eine weitere vorteilhafte Weiterbildung der Erfindung schließlich sieht vor, dass der ringförmige Halteabschnitt aus Kunststoff besteht, in welchen auf der im Betrieb der Greifvorrichtung zugewandten Seite des Probenhalters in z-Richtung verlaufende ferromagnetische Stäbe eingepasst sind, zwischen denen die Probe oder ein die Probe enthaltendes Gefäß aufgenommen werden können. Eine solche Anordnung lässt sich relativ preisgünstig herstellen und handhaben.

In den Rahmen der Erfindung fallen auch ein Probenhalter mit den oben beschriebenen Eigenschaften sowie eine erfindungsgemäß modifizierte Greifvorrichtung zum Einsatz in einem Röntgen-Analysegerät der erfindungsgemäßen Art.

Weitere Vorteile ergeben sich aus den Zeichnungen und der Beschreibung. Ebenso können die vorstehend genannten und die noch weiter aufgeführten Merkmale erfindungsgemäß einzeln für sich und zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in Zeichnungen dargestellt und wird anhand von Ausführungsbeispielen näher erläutert. Es zeigen:
- Fig. 1: eine schematisierte Darstellung der Greifvorrichtung des linear verschiebbaren Probentisches sowie der Messposition in einem erfindungsgemäßen Röntgen-Analysegerät;
- Fig. 2: einen schematischen Horizontalschnitt durch eine erfindungsgemäß ausgebildete Greifvorrichtung, die eine Probe umfasst, welche in einem erfindungsgemäß zugerichteten ringförmigen Probenhalter eingepasst ist;
- Fig. 3: eine Draufsicht von oben auf die Probe mit Probenhalter nach Fig. 2;
- Fig. 4: eine Draufsicht von oben auf eine Probe mit stabförmigem Probenhalter und ringförmigem Halteabschnitt; und
- Fig. 5: einen schematischen Vertikalschnitt durch eine Greifvorrichtung mit Probe und Probenring nach dem Stand der Technik.

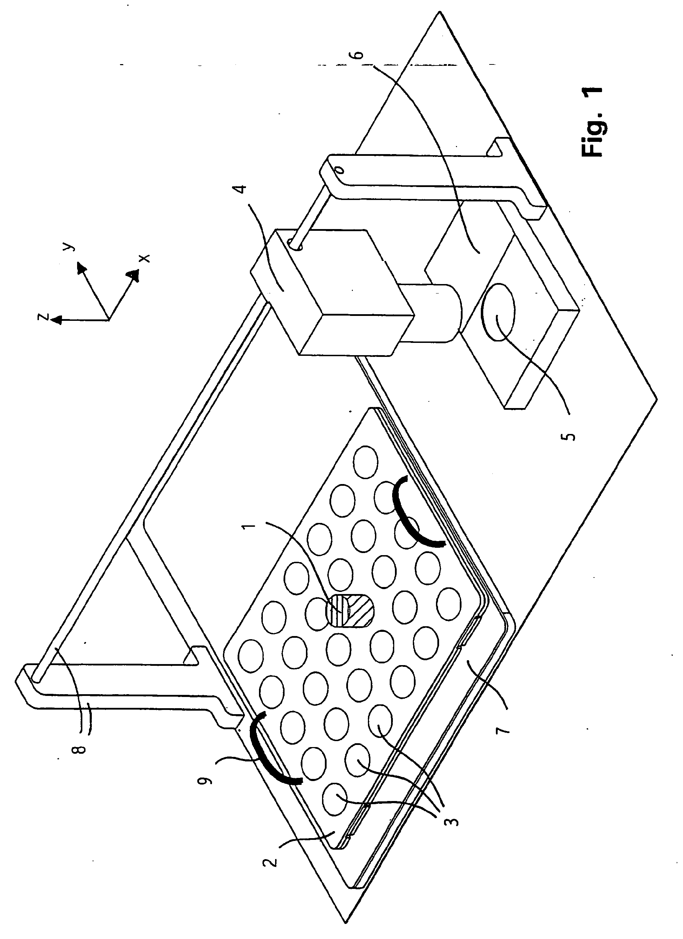

In Fig. 1 ist schematisiert ein Teil der "Innereien" eines erfindungsgemäßen Röntgen-Analysegerätes dargestellt. Repräsentativ für eine Vielzahl von zu untersuchenden Proben ist lediglich eine einzige Probe 1 auf einem Probentisch 2 eingezeichnet. Der Probentisch 2 enthält matrixförmig in m-Zeilen angeordnete Ablege-Positionen 3, von denen jede mit einer Probe bestückt werden kann.

Zur gezielten Entnahme einer beliebigen Probe 1 aus einer Ablege-Position 3 im Probentisch 2 ist eine Greifvorrichtung 4 vorgesehen, mit der die entnommene Probe 1 einer Mess-Position 5 zugeführt werden kann. Um die Umwelt im Betrieb vor Röntgenstrahlung zu schützen, kann die Mess-Position 5 mit einem strahlungsabschirmenden Schieber 6 während der Messung abgedeckt werden.

Damit die Greifvorrichtung 4 jede einzelne der Ablege-Positionen 3 im Probentisch 2 erreichen kann, ist die Greifvorrichtung 4 in x-Richtung längs einer der m Zeilen an einem Gestänge 8 verschiebbar. Rechtwinklig dazu in y-Richtung kann der Probentisch 2 auf einer Schienenplatte 7 linear verfahren werden. Der Probentisch 2 ist abnehmbar auf der Schienenplatte 7 gelagert, so dass die Proben 1 auch per Hand von außerhalb des erfindungsgemäßen Röntgen-Analysegerätes in die Ablege-Positionen 3 eingelegt werden können. Zum Herausnehmen des Probentisches 2 aus der Apparatur sind im gezeigten Ausführungsbeispiel zwei Griffe 9 vorgesehen.

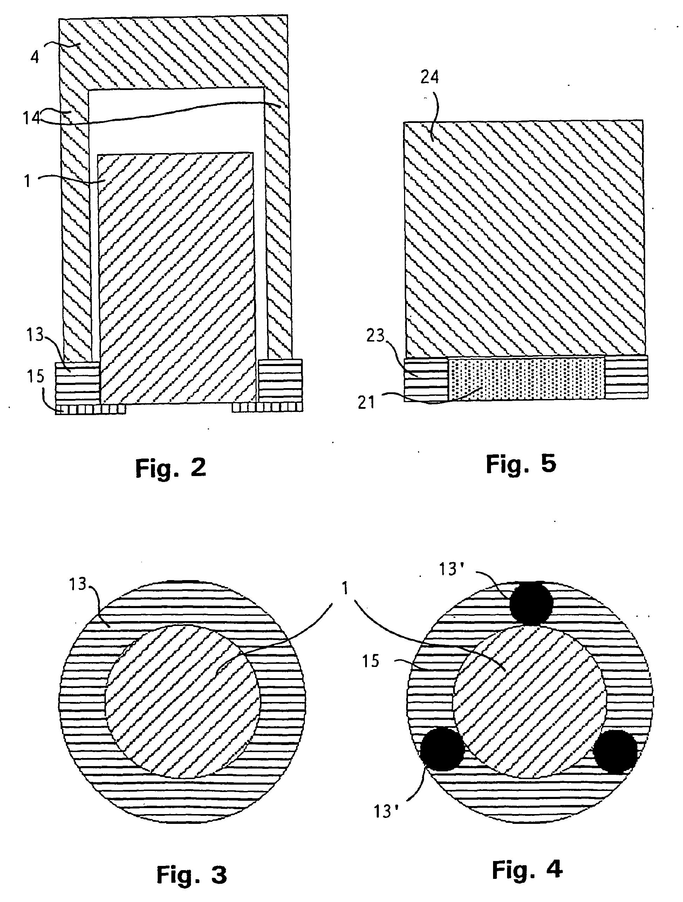

In Fig. 2 ist sehr schematisch ein Vertikalschnitt durch eine erfindungsgemäße Greifvorrichtung 4 gezeigt, die mittels Stäben 14 eine in z-Richtung weiter als üblich ausgedehnte Probe 1 seitlich umgreift und gegen einen Probenhalter 13 gefahren ist, der die Probe 1 ringförmig umgibt. Der Probenhalter 13 ist bodenseitig mit einem ringförmigen Halteabschnitt 15 verbunden, welcher die Probe 1 unterfasst und als mechanischer Anschlag für die Probe 1 in z-Richtung wirkt.

Zum Ergreifen des Probenhalters 13 mit der darin eingepassten Probe 1 können die Stäbe 14 der Greifvorrichtung 4 als Magnete ausgebildet sein, wobei dann der Probenhalter 13 aus magnetisierbarem, vorzugsweise permanentmagnetischem Material ausgebildet sein muss. Der Greifer 4 kann dabei als Elektromagnet oder als Permanentmagnet aufgebaut sein.

Alternativ können die Stäbe 14 der Greifvorrichtung 4 aber auch als Saugrüssel zum Ansaugen von Teilen des Probenhalter 13, der die Probe 1, wie in Fig. 3 gezeigt, ringförmig umgibt, ausgebildet sein.

Dies ist jedoch nicht Teil der Erfindung.

Anstelle von Stäben 14 kann die Greifvorrichtung 4 aber auch probenseitig ein röhrenförmiges Ende aufweisen, welches einen lichten Innendurchmesser besitzen muss, der größer als der Außendurchmesser der die Haltevorrichtung 13 in z-Richtung überragenden Teile der Probe 1 sein muss. Dann kann die Greifvorrichtung 4 mit diesem röhrenförmigen Ende ebenfalls in z-Richtung über die Probe 1 geschoben werden und den Probenhalter 13 ergreifen.

Alternativ zu dem in Fig. 3 gezeigten Probenhalter 13 kann, wie in Fig. 4 dargestellt ist, ein Probenhalter 13' vorgesehen sein, welcher untereinander parallele Stäbe enthält, die sich in z-Richtung erstrecken, und zwischen die die Probe 1 eingepasst ist. Wie in dem Ausführungsbeispiel von Fig. 4 gezeigt, können die parallelen Stäbe des Probenhalters 13' bodenseitig fest mit einem ringförmigen Halteabschnitt 15 verbunden sein, welcher, wie in Fig. 2 dargestellt, die Probe 1 bodenseitig unterfasst.

Statt magnetisch oder pneumatisch kann die Greifvorrichtung 4 in Ausführungsformen, die nicht Teil der Erfindung sind und welche in der Zeichnung nicht dargestellt sind, mechanisch arbeiten. Der geometrische Aufbau der probenseitigen Teile der Greifvorrichtung 4 würde aber ähnlich wie bei den gezeigten Ausführungsbeispielen gestaltet sein.

In Fig. 5 schließlich ist zum Vergleich schematisiert eine Greifvorrichtung 24 nach dem Stand der Technik gezeigt, die einen Probenring 23 mit einer darin eingepassten Probe 21 (ebenfalls nach dem Stand der Technik) ergreift. Im Gegensatz zu dem in Fig. 2 gezeigten Ausführungsbeispiel schließt die Probe 21 in Fig. 5 in z-Richtung mit dem Probenring 23 eben ab. Daher muss das probenseitige Ende der Greifvorrichtung 24 auch keine Ausgestaltung aufweisen, die es erlauben würde, überragende Teile der Probe seitlich zu umfassen.

## Patentansprüche

1. Greifvorrichtung (4) zur gezielten Entnahme einer in z-Richtung erheblich ausgedehnten Probe (1) aus einer Ablege-Position (3) und zur Zuführung in eine Übergabe- und/oder Mess-Position (5) sowie zurück auf eine Ablege-Position (3) in einem Röntgen-Analysegerät , wobei die Greifvorrichtung (4) magnetisch arbeitet
**dadurch gekennzeichnet,**
**dass** die Greifvorrichtung (4) probenseitig so ausgebildet ist, dass sie die den Probenhalter (13;13') überragenden Teile einer Probe (1) oder des die Probe (1) enthaltenden Gefäßes in einer Betriebsstellung in z-Richtung umschließen und den Probenhalter (13;13') ergreifen kann

2. Greifvorrichtung (4) nach Anspruch 1, **dadurch gekennzeichnet, dass** die Greifvorrichtung (4) mindestens drei, vorzugsweise gleichmäßig um den Umfang der zu haltenden Probe (1) verteilte, in z-Richtung verlaufende parallele Stäbe (14) aufweist.

3. Greifvorrichtung (4) nach Anspruch 1, **dadurch gekennzeichnet, dass** die magnetischen Mittel ein röhrenförmiges Ende umfassen, welches einen lichten Innendurchmesser besitzt.

4. Röntgen-Analysegerät mit einem Probenhalter zur Aufnahme einer, in z-Richtung erheblich ausgedehnten Probe (1) oder ein Gefäßes, welches die Proben (1) enthält, und mit einer Greifvorrichtung (4) nach einem der vorhergehenden Ansprüche.

5. Röntgen-Analysegerät nach Anspruch 4, **dadurch gekennzeichnet, dass** der Probenhalter (13;13') im Anschluss an das bodenseitige Ende der Probe (1) oder eines die Probe (1) enthaltenden Gefäßes einen (oder mehrere) Halteabschnitt(e) (15) aufweist, der (die) in einer zur x-y-Ebene parallelen Ebene die Probe (1) oder das die Probe (1) enthaltende Gefäß unterfasst (unterfassen) und als mechanischer Anschlag in z-Richtung für die Probe (1) oder das die Probe (1) enthaltende Gefäß wirkt (wirken).

6. Röntgen-Analysegerät nach Anspruch 5, **dadurch gekennzeichnet, dass** der Halteabschnitt (15) ringförmig aufgebaut ist.

7. Röntgen-Analysegerät nach einem der Ansprüche 5 oder 6, **dadurch gekennzeichnet, dass** der Probenhalter (13) die Probe (1) auf seiner im Betrieb der Greifvorrichtung (4) zugewandten Seite ringförmig, vorzugsweise kreisringförmig umgibt.

8. Röntgen-Analysegerät nach einem der Ansprüche 5 bis 7, **dadurch gekennzeichnet, dass** der Probenhalter (13') die Probe (1) auf seiner im Betrieb der Greifvorrichtung (4) zugewandten Seite mit mehreren in z-Richtung verlaufenden, untereinander parallelen Stäben in Umfangsrichtung umgibt.

9. Röntgen-Analysegerät nach den Ansprüchen 6 und 8, **dadurch gekennzeichnet, dass** die parallelen Stäbe auf der im Betrieb der Greifvorrichtung (4) zugewandten Oberseite des ringförmigen Halteabschnitts (15) angeordnet sind.

10. Röntgen-Analysegerät nach Anspruch 9, **dadurch gekennzeichnet, dass** der ringförmige Halteabschnitt (15) aus Kunststoff besteht, in welchen auf der im Betrieb der Greifvorrichtung (4) zugewandten Seite des Probenhalters (13;13') in z-Richtung verlaufende ferromagnetische Stäbe eingepasst sind, zwischen denen die Probe (1) oder ein die Probe (1) enthaltendes Gefäß aufgenommen werden können.

## Claims

1. Gripping device (4) for precise removal of a sample (1), the sample (1) being substantially expanded in the z direction, from a depositing position (3) and for transfer thereof into a transfer and/or measuring position (5) and back to a depositing position (3) in an X-ray analysis device, wherein the gripping device (4) is magnetically operated,
**characterized in that**
on the sample side, the gripping device (4) is designed to surround parts of a sample (1) or of the sample (1) container projecting past the sample holder (13;13') in the z direction in an operating position and to grasp the sample holder (13;13').

2. Gripping device (4) according to claim 1, **characterized in that** the gripping device (4) has at least three parallel rods (14) which are preferably uniformly distributed around the circumference of the sample (1) to be held, and extend in the z direction.

3. Gripping device (4) according to claim 1, **characterized in that** the magnetic means comprise a tubular end having an inside diameter.

4. X-ray analysis apparatus comprising a sample holder for receiving a sample (1) being substantially expanded in the z direction, or a container containing the samples (1), and a gripping device (4) according to any one of the preceding claims.

5. X-ray analysis apparatus according to claim 4, **characterized in that** the sample holder (13;13') comprises one (or more) holding section(s) (15) disposed adjacent to the bottom-sided end of the sample (1) or sample (1) container, wherein the holding section(s) engage(s) below the sample (1) or sample (1) container in a plane parallel to the x-y plane and act(s) as a mechanical stop in the z direction for the sample (1) or the sample (1) container.

6. X-ray analysis apparatus according to claim 5, **characterized in that** the holding section (15) is annular.

7. X-ray analysis apparatus according to one of the claims 5 or 6, **characterized in that** the sample holder (13) surrounds the sample (1) on its side facing the gripping device (4) during operation in an annular, preferably circular fashion.

8. X-ray analysis apparatus according to any one of the claims 5 through 7, **characterized in that** the sample holder (13') has several parallel rods which extend in the z direction and peripherally surround the sample (1) on the side of the sample holder facing the gripping device (4) during operation.

9. X-ray analysis apparatus according to claims 6 and 8, **characterized in that** the parallel rods are disposed on the upper side of the annular holding section (15) facing the gripping device (4) during operation.

10. X-ray analysis apparatus according to claim 9, **characterized in that** the annular holding section (15) consists of plastic material, into which ferromagnetic rods, which extend in the z direction, are fitted on the side of the sample holder (13;13') facing the gripping device (4) during operation and between which the sample (1) or sample (1) container can be received.

## Revendications

1. Dispositif de préhension (4) pour prélever de manière ciblée un échantillon (1) considérablement allongé en direction z depuis une position de stockage (3) et l'amener à une position de transfert et/ou de mesure (5) ainsi que le ramener à une position de stockage (3) dans un appareil d'analyse à rayons X, le dispositif de préhension (4) fonctionnant magnétiquement,
**caractérisé en ce**
**que** le dispositif de préhension (4) est configuré côté échantillon de façon à pouvoir, dans une position de fonctionnement, entourer en direction z les parties d'un échantillon (1) ou du récipient contenant l'échantillon (1) qui dépassent du porte-échantillon (13 ; 13') et saisir le porte-échantillon (13 ; 13').

2. Dispositif de préhension (4) selon la revendication 1, **caractérisé en ce que** le dispositif de préhension (4) présente au moins trois barres parallèles (4) s'étendant en direction z, de préférence réparties régulièrement sur la circonférence de l'échantillon (1) à tenir.

3. Dispositif de préhension (4) selon la revendication 1, **caractérisé en ce que** les moyens magnétiques comprennent une extrémité en forme de tube qui possède un diamètre intérieur libre.

4. Appareil d'analyse à rayons X avec un porte-échantillon destiné à recevoir un échantillon (1) considérablement allongé en direction z ou un récipient qui contient les échantillons (1), et avec un dispositif de préhension (4) selon une des revendications précédentes.

5. Appareil d'analyse à rayons X selon la revendication 4, **caractérisé en ce que** le porte-échantillon (13 ; 13') présente à la suite de l'extrémité côté fond de l'échantillon (1) ou d'un récipient contenant l'échantillon (1) une (ou plusieurs) portion(s) de maintien (15) qui soutient (soutiennent) l'échantillon (1) ou le récipient contenant l'échantillon (1) dans un plan parallèle au plan x-y et agit (agissent) comme butée mécanique en direction z pour l'échantillon (1) ou le récipient contenant l'échantillon (1).

6. Appareil d'analyse à rayons X selon la revendication 5, **caractérisé en ce que** la portion de maintien (15) est conformée en anneau.

7. Appareil d'analyse à rayons X selon une des revendications 5 ou 6, **caractérisé en ce que** le porte-échantillon (13) entoure à la manière d'un anneau, de préférence d'un anneau de cercle, l'échantillon (1) de son côté tourné en fonctionnement vers le dispositif de préhension (4).

8. Appareil d'analyse à rayons X selon une des revendications 5 à 7, **caractérisé en ce que** le porte-échantillon (13') entoure en direction circonférentielle l'échantillon (1) de son côté tourné en fonctionnement vers le dispositif de préhension (4) par plusieurs barres parallèles entre elles s'étendant en direction z.

9. Appareil d'analyse à rayons X selon les revendications 6 et 8, **caractérisé en ce que** les barres parallèles sont disposées du côté supérieur de la portion de maintien annulaire (15) tourné en fonctionnement vers le dispositif de préhension (4).

10. Appareil d'analyse à rayons X selon la revendication 9, **caractérisé en ce que** la portion de maintien annulaire (15) est composée d'une matière plastique dans laquelle sont encastrées, du côté du porte-échantillon (13 ; 13') tourné en fonctionnement vers le dispositif de préhension (4), des barres ferromagnétiques s'étendant en direction z, entre lesquelles l'échantillon (1) ou un récipient contenant l'échantillon (1) peut être reçu.
